(19) Europäisches Patentamt
European Patent Office
Office européen des brevets

(11) Veröffentlichungsnummer: **0 522 472 A2**

(12) # EUROPÄISCHE PATENTANMELDUNG

(21) Anmeldenummer: **92111354.4**

(22) Anmeldetag: **03.07.92**

(51) Int. Cl.5: **C08L 59/00**, //(C08L59/00, 77:00,63:02)

(30) Priorität: **12.07.91 DE 4123051**

(43) Veröffentlichungstag der Anmeldung:
**13.01.93 Patentblatt 93/02**

(84) Benannte Vertragsstaaten:
**BE DE FR GB NL**

(71) Anmelder: **BASF Aktiengesellschaft**
**Carl-Bosch-Strasse 38**
**W-6700 Ludwigshafen(DE)**

(72) Erfinder: **Mc Kee, Graham Edmund, Dr.**
**Kastanienweg 8**
**W-6940 Weinheim(DE)**
Erfinder: **Goerrissen, Heiner, Dr.**
**Im Zinkig 112**
**W-6700 Ludwigshafen(DE)**
Erfinder: **Bohnet, Siegbert, Dr.**
**Collinistrasse 5,**
**W-6800 Mannheim 1(DE)**
Erfinder: **Weigelt, Franz Werner, Dr.**
**Ultraform Company, P.O. Box 1137**
**Theodore, Alabama 36590(US)**

(54) **Polyoxymethylen-Formmassen mit verbesserter Wärmestabilität.**

(57) Thermoplastische Formmassen, enthaltend als wesentliche Komponenten

A) 40 - 99,99 Gew.-% eines Polyoxymethylenhomo- oder copolymerisats,

B) 0,005 - 1,99 Gew.-% eines Polyamids mit einem Schmelzpunkt von weniger als 220 °C,

C) 0,005 - 10 Gew.-% eines Polykondensationsprodukts aus 2,2-Di-(4-hydroxyphenyl)propan und Epichlorhydrin,

sowie darüber hinaus

D) 0 - 50 Gew.-% eines schlagzäh modifizierenden Polymeren und

E) 0 - 50 Gew.-% faser- oder teilchenförmige Füllstoffe oder deren Mischungen.

EP 0 522 472 A2

Die vorliegende Erfindung betrifft thermoplastische Formmassen, enthaltend als wesentliche Komponenten

A) 40 - 99,99 Gew.-% eines Polyoxymethylenhomo- oder copolymerisats

B) 0,005 - 1,99 Gew.-% eines Polyamids mit einem Schmelzpunkt von weniger als 220°C,

C) 0,005 - 10 Gew.-% eines Polykondensationsprodukts aus 2,2-Di-(4-hydroxyphenyl)propan und Epichlorhydrin,

sowie darüber hinaus

D) 0 - 50 Gew.-% eines schlagzäh modifizierenden Polymeren und

E) 0 - 50 Gew.-% faser- oder teilchenförmige Füllstoffe oder deren Mischungen.

Darüber hinaus betrifft die Erfindung die Verwendung derartiger Formmassen zur Herstellung von Formkörpern jeglicher Art, und die so erhaltenen Formkörper.

Polyoxymethylen-Formmassen finden als thermoplastische Werkstoffe in vielen Anwendungen ihren Einsatz, insbesondere für Gehäuse und Maschinenbauteile sowie im Automobilsektor.

Bei allen diesen Anwendungen ist stets darauf zu achten, daß die Wärmestabilität des Polymeren ausreichend ist, denn nicht stabilisierte Polyoxymethylene zeigen bei thermischer Beanspruchung einen ausgeprägten Molekulargewichtsabau, der entlang der Polymerkette solange fortschreitet, bis eine C-C-Bindung in der Kette auftritt.

Dies hat dazu geführt, bei der Polymerisation von Trioxan oder Formaldehyd Comonomere mitzuverwenden, durch deren Einbau C-C-Bindungen in der Kette entstehen. Dies kann den thermischen Abbau der Polyoxymethylene zwar reduzieren, aber eine weitere Verbesserung wäre wünschenswert.

In einer Reihe von Veröffentlichungen wird die Verwendung von Polyamiden als Wärmestabilisatoren für Polyoxymethylene beschrieben, gegebenenfalls unter Zusatz weiterer Stoffe. Nur beispielsweise sie hier auf die US-A 3 406 223, die FR-A 1 570 281 und die US-A 3 480 694 verwiesen. In der jap. Offenlegungsschrift 51/17972 werden mit aromatischen Polyamiden stabilisierte Polyoxymethylene beschrieben, die eine geringe Verfärbung bei der Verarbeitung erleiden und eine geringe Neigung zum Schäumen aufweisen. In der EP-A 47 529 werden stabilisierte Polyoxymethylen-Formmassen beschrieben, die zur Stabilisierung ein in einem Trägerharz dispergiertes Polyamid enthalten.

Alle derart stabilisierten Produkte zeigen zwar gegenüber dem Polyoxymethylen ohne Zusätze eine verbesserte Wärmestabilität, können jedoch noch nicht in vollem Umfang zufriedenstellen.

In der älteren deutschen Anmeldung P 40 07 767.5 werden Polyoxymethylen-Formmassenbeschrieben, die zur Wärmestabilisierung eine Mischung aus einem Poly-ε-caprolactam und einem Polykondensationsprodukt aus 2,2-(4-hydroxyphenyl)propan und Epichlorhydrin enthalten.

Gegenstand der älteren deutschen Anmeldung P 40 30 694.1 sind Mischungen aus einem Polyoxymethylenhomo- oder -copolymeren, mindestens 2 Gew.-% eines Polyamids und einem Kondensationsprodukt aus 2,2-Di-(4-hydroxyphenyl)propan und Epichlorhydrin.

Aufgabe der vorliegenden Erfindung war es daher, Polyoxymethylen-Formmassen mit verbesserter Wärmestabilität zur Verfügung zu stellen.

Diese Aufgabe wird erfindungsgemäß gelöst durch thermoplastische Formmassen, enthaltend als wesentliche Komponenten

A) 40 - 99,99 Gew.-% eines Polyoxymethylenhomo- oder copolymerisats

B) 0,005 - 1,99 Gew.-% eines Polyamids mit einem Schmelzpunkt von weniger als 220°C,

C) 0,005 - 10 Gew.-% eines Polykondensationsprodukts aus 2,2-Di-(4-hydroxyphenyl)propan und Epichlorhydrin,

sowie darüber hinaus

D) 0 - 50 Gew.-% eines schlagzäh modifizierenden Polymeren und

E) 0 - 50 Gew.-% faser- oder teilchenförmige Füllstoffe oder deren Mischungen.

Bevorzugte Massen dieser Art sind den Unteransprüchen zu entnehmen.

Als Komponente A) enthalten die erfindungsgemäßen Formmassen 40 bis 99,99, vorzugsweise 60 bis 99,8 Gew.-% und insbesondere 70 bis 99,8 Gew.-% eines Polyoxymethylenhomo- oder Copolymerisats.

Derartige Polymerisate sind dem Fachmann an sich bekannt und in der Literatur beschrieben.

Ganz allgemein weisen diese Polymere mindestens 50 mol-% an wiederkehren-d18 Einheiten $-CH_2O-$ in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A bevorzugt, insbesondere solche, die neben den wiederkehrenden Einheiten $-CH_2O-$ noch bis zu 50, vorzugsweise 0,1 bis 20 und insbesondere 0,3 bis 10 mol-% an wiederkehrenden Einheiten

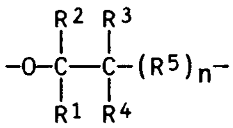

wobei $R^1$ bis $R^4$ unabhängig voneinander ein Wasserstofatom, eine $C_1$- bis $C_4$-Alkylgruppe oder eine halogensubstituierte Alkylgruppe mit 1 bis 4 C-Atomen und $R^5$ eine $-CH_2-$, $-CH_2O-$, eine $C_1$- bis $C_4$-Alkyl- oder $C_1$- bis $C_4$-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel

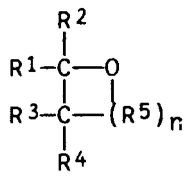

wobei $R^1$ bis $R^5$ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie linare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise einer bifunktionellen Verbindung der Formel

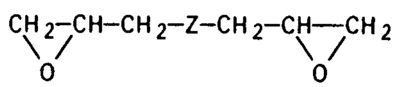

wobei Z eine chemische Bindung, -O-, -ORO- (R = $C_1$- bis $C_8$-Alkylen oder $C_2$- bis $C_8$-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150 °C und Molekulargewichte (Gewichtsmittelwert) Mw im Bereich von 5000 bis 200000, vorzugsweise von 7000 bis 150000.

Endgruppenstabilisierte Polyoxymethylenpolymerisate, die an den Kettenenden C-C-Bindungen aufweisen, werden besonders bevorzugt.

Als Komponente A) können insbesondere auch Produkte eingesetzt werden, die noch einen relativ hohen Anteil (im allg. > 0,1 Gew.-%) an thermisch instabilen Anteilen enthalten. Die Komponenten B) und C), insbesondere wenn sie vor der Mischung mit dem Polyoxymethylen vorgemischt werden, stabiliseren derartige Roh-Polyoxymethylene sehr gut.

Die als Komponenten B) verwendbaren Polyamide sind an sich bekannt. Halbkristalline oder amorphe Harze, wie sie z.B. in der Encyclopedia of Polymer Science and Engineering, Vol. 11, S. 315 bis 489, John Wiley & Sons, Inc. 1988 beschrieben werden, können eingesetzt werden, solange der Schmelzpunkt des Polyamids unter 220 °C, vorzugsweise unter 215 °C liegt.

Beispiele hierfür sind Polyhexamethylenazelainsäureamid, Polyhexamethylensebacinsäureamid, Polyhexamethylendodekandisäureamid, Poly-11-aminoundekansäureamid und Bis-(p-aminocyclohexyl)-methandodekansäurediamid oder die durch Ringöffnung von Lactamen, z.B. oder Polylaurinlactam erhaltenen

Produkte. Auch Polyamide auf der Basis von Terephthal- oder Isophthalsäure als Säurekomponente und/oder Trimethylhexamethylendiamin oder Bis-(p-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet.

Als besonders geeignete Polyamide seien Mischpolyamide auf der Grundlage von Caprolactam, Hexamethylendiamin, p,p'-Diaminodicyclohexylmethan und Adipinsäure genannt. Ein Beispiel hierfür ist das unter der Bezeichnung Ultramid® 1 C von der BASF Aktiengesellschaft vertriebene Produkt.

Weitere geeignete Polyamide werden von der Fa. Du Pont unter der Bezeichnung Elvamide® vertrieben.

Die Herstellung dieser Polyamide wird ebenfalls in der vorgenannten Schrift beschrieben. Das Verhältnis von endständigen Aminogruppen zu endständigen Säuregruppen kann durch Variation des Molverhältnisses der Ausgangsverbindungen gesteuert werden.

Der Anteil des Polyamids in der erfindungsgemäßen Formmasse beträgt 0,005 bis 1,99 Gew.-%, bevorzugt 0,1 bis 1,5 Gew.-%.

Durch die Mitverwendung eines Polykondensationsprodukts aus 2,2-Di-(4-hydroxyphenyl)propan (Bisphenol A) und Epichlorhydrin (Komponente C)) kann die Dispergierbarkeit der verwendeten Polyamide verbessert werden. Außerdem zeigen derartige Produkte eine hellere Eigenfarbe und weniger Stippen und Schlieren als Produkte, die nur Polyamid enthalten.

Die Komponente C) wird in einer Menge von 0,005 bis 10 Gew.-%, bevorzugt von 0, 1 bis 5 und insbesondere von 0, 1 bis 3 Gew.-% eingesetzt.

Auch die Kondensationsprodukte aus Epichlorhydrin und Bisphenol A sind kommerziell erhältlich. Verfahren zu deren Herstellung sind dem Fachmann ebenfalls bekannt. Handelsbezeichnungen der Polykondensate sind Phenoxy® (der Union Carbide Corporation) bzw. Epikote® (Fa. Shell). Das Molekulargewicht der Polykondensate kann in weiten Grenzen variieren; prinzipiell sind die im Handel erhältlichen Typen sämtlich geeignet.

Als Komponente D) enthalten die erfindungsgemäßen thermoplastischen Formmassen 0 bis 50, vorzugsweise 0 bis 40 Gew.-% eines schlagzäh modifizierenden Polymeren (im folgenden auch als kautschukelastisches Polymerisat oder Elastomer bezeichnet).

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tri-cyclo-(5.2.1.0.2.6)-3,8-decadien oder deren Mischungen genannt. Bevorzugt werden Hexa-1,5-dien-5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

Eine weitere Gruppe bevorzugter Kautschuke sind Copolymere des Ethylens mit Estern von (Meth)-acrylsäure. Zusätzlich können die Kautschuke noch Epoxy-Gruppen enthaltende Monomere enthalten. Diese Epoxygruppen enthaltende Monomere werden vorzugsweise durch Zugabe Epoxygruppen enthaltenden Monomeren der allgemeinen Formeln I oder 11 zum Monomerengemisch in den Kautschuk eingebaut

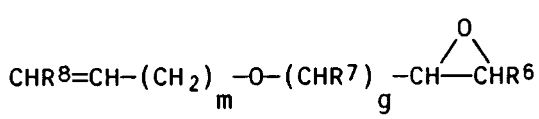
(I)

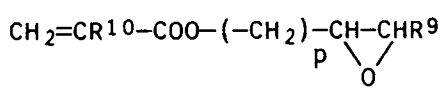
(II)

wobei $R^6$ - $R^{10}$ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste $R^6$ bis $R^8$ Wasserstoff, wobei m für 0 oder 1 und g für 1 steht. Die entsprechenden Verbindungen sind Allylglycidylether und Vinylglycidylether.

Bevorzugte Verbindungen der Formel II sind Epoxygruppen-enthaltende Ester der Acrylsäure und/oder

Methacrylsäure, wie Glycidylacrylat und Glycidylmethacrylat.

Vorteilhaft bestehen die Copolymeren aus 50 bis 98 Gew.-% Ethylen, 0,1 bis 20 Gew.-% Epoxygruppen enthaltenden Monomeren sowie der restlichen Menge an (Meth)acrylsäureestern.

Besonders bevorzugt sind Copolymerisate aus

| | |
|---|---|
| 50 bis 98, | insbesondere 55 bis 95 Gew.-% Ethylen, insbesondere |
| | 0,3 bis 20 Gew.-% Glycidylacrylat und/oder |
| 0,1 bis 40, | Glycidylmethacrylat, und |
| 1 bis 45, | insbesondere 10 bis 40 Gew.-% n-Butylacrylat |
| | und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0 °C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20 °C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Amino- oder Amidgruppen sowie funktionelle Gruppen, die durch Mitverwendung von Monomeren der allgemeinen Formel

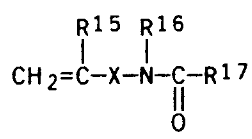

eingeführt werden können,

wobei die Substituenten folgende Bedeutung haben können:

- $R^{15}$ Wasserstoff oder eine $C_1$- bis $C_4$-Alkylgruppe,
- $R^{16}$ Wasserstoff, eine $C_1$- bis $C_8$-Alkylgruppe oder eine Arylgruppe, insbesondere Phenyl,
- $R^{17}$ Wasserstoff, eine $C_1$- bis $C_{10}$-Alkyl-, eine $C_6$- bis $C_{12}$-Arylgruppe oder $-OR^{18}$
- $R^{18}$ eine $C_1$- bis $C_8$-Alkyl- oder $C_6$- bis $C_{12}$-Arylgruppe, die gegebenenfalls mit O- oder N-haltigen Gruppen substituiert sein können,
- X eine chemische Bindung, eine $C_1$- bis $C_{10}$-Alkylen- oder $C_6$-$C_{12}$-Arylengruppe oder

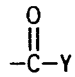

Y O-Z- oder NH-Z und

Z eine $C_1$- bis $C_{10}$-Alkylen- oder C6- bis $C_{12}$-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannten pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente D) bis zu 5 Gew.-%, vorzugsweise nicht mehr als 3 Gew.-%, bezogen auf D).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Monomere für den Kern | Monomere für die Hülle |
|---|---|
| Buta-1,3-dien, Isopren, n-Butyl-acrylat, Ethylhexylacrylat oder deren Mischungen, ggf. zusammen mit vernetzenden Monomeren | Styrol, Acrylnitril, (Meth)acrylate, gegebenenfalls mit reaktiven Gruppen wie hierin beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Die beschriebenen Elastomere D) können auch nach anderen üblichen Verfahren, z.B. durch Suspensionspolymerisation, hergestellt werden.

Weitere bevorzugte Kautschuke sind Polyurethane, wie in den EP-A 115 846, EP-A 115 847, EP-A 116 456, EP-A 117 664 und der EP-A 327 384 beschrieben. Kommerziell im Handel sind solche Produkte z.B. unter den Bezeichnungen Desmopan® (Bayer AG) oder Elastollan® (Elastogran Polyurethane GmbH) erhältlich.

Selbstverständlich können auch Mischungen der vorstehend aufgeführten Kautschuktypen eingesetzt werden.

Als Komponente E) können die erfindungsgemäßen Formmassen 0 bis 50, vorzugsweise 5 bis 40 Gew.-% eines faser- oder teilchenförmigen Füllstoffs oder deren Mischungen enthalten.

Als verstärkend wirkende Füllstoffe seien beispielsweise KaliumtitanatWhisker, Kohlenstoff- und vorzugsweise Glasfasern genannt, wobei die Glasfasern z.B. in Form von Glasgeweben, -matten, -vliesen

und/oder Glasseidenrovings oder geschnittener Glasseide aus alkaliarmem E-Glas mit einem Durchmesser von 5 bis 200 µm, vorzugsweise 8 bis 50 µm eingesetzt werden können, wobei die faserförmigen Füllstoffe nach ihrer Einarbeitung vorzugsweise eine mittlere Länge von 0,05 bis 1 mm, insbesondere 0,1 bis 0,5 mm aufweisen.

Andere geeignete Füllstoffe sind beispielsweise Wollastonit, Calciumcarbonat, Glaskugeln, Quarzmehl, Si- und Bornitrid oder Mischungen dieser Füllstoffe.

Neben den Komponenten A), B) und C) sowie ggf. D) und E) können die erfindungsgemäßen Formmassen noch übliche Zusatzstoffe und Verarbeitungshilfsmittel enthalten. Nur beispielhaft seien hier Zusätze zum Abfangen von Formaldehyd (Formaldehyd-Scavenger), Weichmacher, Schmiermittel, Antioxidantien, Haftvermittler, Füllstoffe, Lichtstabilisatoren und Pigmente genannt. Der Anteil solcher Zusätze liegt im allgemeinen im Bereich von 0,001 bis 5 Gew.-% (Stabilisatoren, Pigmente und Schmiermittel) bzw. 5 bis 40 Gew.-% (Füllstoffe).

Entsprechende Verbindungen sind dem Fachmann bekannt und beispielsweise in der EP-A 327 384 beschrieben.

Die Herstellung der erfindungsgemäßen thermoplastischen Formmassen erfolgt durch Mischen der Komponenten in an sich bekannter Weise, weshalb sich hier detaillierte Angaben erübrigen. Vorzugsweise wird das Polyamid mit dem Kondensationsprodukt aus Bisphenol A und Epichlorhydrin in der Schmelze, in Lösung oder in einem Sinterverfahren (d.h. einem Abmischverfahren für Feststoffe bei höheren Temperaturen) vorgemischt und das so erhaltene Produkt in der Schmelze mit dem Polyoxymethylen und ggf. D) und E) gemischt, extrudiert und granuliert.

Die erfindungsgemäßen thermoplastischen Formmassen zeichnen sich durch ein ausgewogenes Eigenschaftsspektrum, insbesondere eine gute thermische Stabilität, eine helle Eigenfarbe und eine geringe Neigung zur Stippen- und Schlierenbildung aus. Demzufolge eignen sie sich besonders zur Herstellung von Fasern, Folien und Formkörpern jeglicher Art.

## Beispiele

Es wurden folgende Komponenten eingesetzt:

### Komponente A:

Polyoxymethylencopolymerisat aus 97,3 Gew.-% Trioxan und 2,7 Gew.-% Butandiolformal. Das Produkt enthielt noch ungefähr 3 Gew.-% nicht umgesetztes Trioxan und 5 Gew.-% thermisch instabile Anteile. Nach Abbau der thermisch instabilen Anteile hatte das Copolymer einen Schmelzindex von 9 g/10 min (190 °C, 2,16 kg, nach DIN 53 735).

Das Polyoxymethylen enthielt weiterhin 0,4 Gew.-% Irganox®245 (Fa. Ciba Geigy) als Stabilisator.

### Komponente B:

Ein Mischpolyamid auf der Basis von

| | |
|---|---|
| 29,2 Gew.-% | Caprolactam |
| 34,5 Gew.-% | einer äquimolaren Mischung aus Hexamethylendiamin und Adipinsäure |
| 36,3 Gew.-% | einer äquimolaren Mischung aus p,p'-Diaminodicyclohexylmethan |

mit einer Viskositätszahl von 120 ml/g, gemessen in 0,5 gew.-%igen Lösung in konz. Schwefelsäure bei 25 °C nach DIN 53 727 (Ultramid® 1C der BASF AG).

B/2 Elvamide® 8063 (Fa. DuPont) ein Copolyamid aus 40 Gew.-% ε-Caprolactam, 40 Gew.-% einer äquimolaren Mischung aus Hexamethylendiamin und Adipinsäure und 20 Gew.-% einer äquimolaren Mischung aus Hexamethylendiamin und Decandisäure (Sebacinsäure) mit einer Viskositätszahl von 150 ml/g, gemessen in 0,5 gew.-%iger Lösung in konz. Schwefelsäure bei 23 °C.

B/3 Polyhexamethylensebacinamid (Polyamid 610) mit einem K-Wert von 7.1, gemessen bei einer Konzentration von 1 g/100 ml in konzentrierter Schwefelsäure bei 25 °C.

### Komponente C

Polykondensationsprodukt aus 2,2-Di-(4-hydrophenyl)propan und Epichlorhydrin (Phenoxy® PKHH der

Fa. Union Carbide).

Zur Herstellung der erfindungsgemäßen Formmassen wurden auf einem Zweischneckenextruder (ZSK 28 der Fa. Werner & Pfleiderer) die Komponenten B und C gemäß der folgenden Tabelle 1 vorgemischt, wobei beide Komponenten in fester Form in den Extruder eindosiert ("cold feed"), anschließend aufgeschmolzen und gemeinsam extrudiert wurden.

Tabelle

| Vorprodukt-Nr. | Anteil Komp. B | | Anteil Komp. C |
|---|---|---|---|
| | Art. | Gew.-% | Gew.-% |
| VP 1 | B/1 | 55 | 45 |
| VP 2 | B/2 | 55 | 45 |
| VP 3 | B/1 | 65 | 35 |
| VP 4 | B/2 | 65 | 35 |
| VP 5 | B/3 | 65 | 35 |

Diese Vorprodukte (VP) wurden dann mit der Komponente A in den in Tabelle 2 angegebenen Mischungsverhältnissen auf einem Zwischenextruder abgemischt und bei 240 °C extrudiert und granuliert.

Tabelle 2

| Beispiel | Komponente A Gew.-% | Vorprodukt (VP) bzw. Komp. B Art | Gew.-% | Ergebnis |
|---|---|---|---|---|
| 1 | 98 | VP1 | 2,0 | helle Eigenfarbe, glatter Produktfaden des Extrudats, keine gefärbten Stippen |
| 1V | 98,9 | B/1 | 1,1 | gelbe Eigenfarbe; Faden des Extrudats rauh; braune Stippen erkennbar |
| 2 | 98 | VP2 | 2,0 | helle Eigenfarbe; Extrudatfaden glatt; keine Stippen |
| 2V | 98,9 | B/2 | 1,1 | rauher Extrudatfaden; braune Stippen |
| 3 | 98,77 | VP3 | 1,23 | helle Eigenfarbe, keine Stippen |
| 3V | 99,2 | B/1 | 0,8 | gelbe Eigenfarbe; braune Stippen zu beobachten |
| 4 | 97,7 | VP4 | 2,3 | glatter Extudatfaden; keine Stippen, helle Eigenfarbe |
| 4V | 98,5 | B/2 | 1,5 | gelbliche Eigenfarbe; braune Stippen im Produkt |
| 5 | 97,7 | VP5 | 2,3 | helle Eigenfarbe, keine Stippen |
| 5V | 98,5 | B/3 | 1,5 | gelbe Produktfarbe; braune Stippen |

Die Ergebnisse in der Tabelle 2 zeigen die vorteilhaften Eigenschaften der erfindungsgemäßen Formmassen im Vergleich zu Formmassen, die lediglich die Komponente B in entsprechenden Mengen enthalten.

**Patentansprüche**

**1.** Thermoplastische Formmassen, enthaltend als wesentliche Komponenten
A) 40 - 99,99 Gew.-% eines Polyoxymethylenhomo- oder copolymerisats,
B) 0,005 - 1,99 Gew.-% eines Polyamids mit einem Schmelzpunkt von weniger als 220 °C,
C) 0,005 - 10 Gew.-% eines Polykondensationsprodukts aus 2,2-Di-(4-hydroxyphenyl)propan und Epichlorhydrin,

sowie darüber hinaus

D) 0 - 50 Gew.-% eines schlagzäh modifizierenden Polymeren und

E) 0 - 50 Gew.-% faser- oder teilchenförmige Füllstoffe oder deren Mischungen.

**2.** Thermoplastische Formmassen nach Anspruch 1, erhältlich durch Vermischen der Komponenten B) und C) in der Schmelze, in Lösung oder in einem Sinterverfahren und anschließendes Abmischen des so erhaltenen Produkts in der Schmelze mit der Komponente A) und gegebenenfalls den Komponenten D) und E).

**3.** Verwendung der thermoplastischen Formmassen gemäß den Ansprüchen 1 bis 2 zur Herstellung von Fasern, Folien und Formkörpern.

**4.** Formkörper, hergestellt aus Formmassen gemäß den Ansprüchen 1 bis 2 als wesentlichen Komponenten.